# EUROPEAN PATENT SPECIFICATION

(11) **EP 2 325 917 B1**
(45) Date of publication and mention of the grant of the patent: **12.03.2014**
(21) Application number: 10251291.0
(22) Date of filing: 20.07.2010
(51) Int. Cl.: H01M 2/00, H01M 2/02, H01M 2/10, H01M 2/20

(54) **Battery assembly**
Batterieanordnung
Ensemble de batterie

(30) Priority: 21.10.2009 US 253761 P
(43) Date of publication of application: 25.05.2011
(73) Proprietor: Samsung SDI Co., Ltd., Gyeonggi-do (KR)
(72) Inventor: Park, Kyung-Ho, Suwon-si Gyeonggi-di (KR); Park, Seok-Ryun, Suwon-si Gyeonggi-di (KR); Koh, Seok, Suwon-si Gyeonggi-di (KR)
(74) Representative: Mounteney, Simon James

(56) References cited:
- EP-A2- 2 006 934
- WO-A1-2007/033689
- US-A1- 2009 104 516
- US-A1- 2009 325 042

## Description

### 1. Field of the Invention

The present invention relates to a battery assembly for a secondary battery.

### 2. Discussion of Related Art

A secondary battery comprises one or more bare cells. Each bare cell includes an electrode assembly configured of a cathode plate, an anode plate, and a separator interposed therebetween together with an electrolyte. The electrode assembly is often received within a can and the upper end of the can is sealed with a cap assembly. Typically, an electrode terminal electrically coupled to the anode plate projects into the cap assembly.

When two or more bare cells are present, a coupling tab is provided. The coupling tab is commonly formed of a stiff plate-shaped metal piece and a corresponding portion of the coupling tab is positioned on an electrode terminal of each of the plurality of bare cells. The coupling tab is electrically coupled to the electrode terminals by welding, soldering, or some other type of mechanical engagement.

During assembly, when the coupling tab is positioned on the plurality of electrode terminals in order to couple the plurality of bare cells, the plurality of bare cells are not fixed against movement. This means that it is difficult for the coupling tab to be engaged in an exact position. Moreover, since there is no separate fixing member that can fix the plurality of bare cells to the coupling tab, the coupling tab itself may be distorted or bent. As a result a plurality of defects can be generated when the battery assembly is manufactured.

EP2006934 discloses a soft package lithium ion power battery module that includes: a battery case, which comprises two face-to-face side walls for providing electrode connection terminal; a plurality soft package lithium ion power batteries assembled in the case and each battery comprising positive and negative electrode tab; and connectors.

US2009104516 discloses a first row of batteries and a second row of batteries both consisting of the same number of cylindrical batteries arranged in parallel are held at both axial ends using holder frame. The holder frame is formed as a rectangular parallelepiped by detachably coupling together an inner frame and two outer frames.

WO2007033689 relates to a rechargeable battery pack, in particular for an electrical hand tool device, comprising at least two series-connected rechargeable battery cells and/or rechargeable battery cell blocks and an electronics unit having a printed circuit board, wherein sheet metal conductors for electrically connecting the series-connected rechargeable battery cells and/or rechargeable battery cell blocks are provided, wherein the sheet metal conductors are connected directly to the printed circuit board.

### SUMMARY OF THE INVENTION

The present invention sets out to provide a battery assembly that does not suffer from the above described problems of the prior art.

Accordingly, the invention provides a battery assembly as set out in Claim 1. Preferred features of the invention are set out in Claims 2 to 14.

Because the coupling tab comprises an anchor formation that is engaged with the frame in which the bare cells are located, the coupling tab can be fixed at an exact position relative to the bare cells, so as to reduce manufacturing defects, thereby making it possible to improve productivity.

### BRIEF DESCRIPTION OF THE DRAWINGS

The accompanying drawings, together with the specification illustrate embodiments of the present invention, and, together with the description, serve to explain the principles of the present invention.

FIG. 1 is an exploded perspective view of a battery assembly according to an embodiment of the present invention;

FIG. 2 is a perspective view of the coupling tab of the embodiment of FIG. 1;

FIG. 3A is a perspective view showing the internal frame and the coupling tab of FIG. 1 in a coupled condition;

FIG. 3B is a plan view showing the internal frame and the coupling tab of FIG. 1 in a coupled condition;

FIG. 4A is a perspective view of the core pack of the embodiment of FIG. 1;

FIG. 4B is a perspective view showing the external frame of the embodiment of FIG. 1; and

FIG. 4C is a perspective view of the battery assembly of FIG. 1.

### DETAILED DESCRIPTION OF THE INVENTION

Hereinafter, a battery assembly according to the invention will be described in detail with reference to the accompanying drawings.

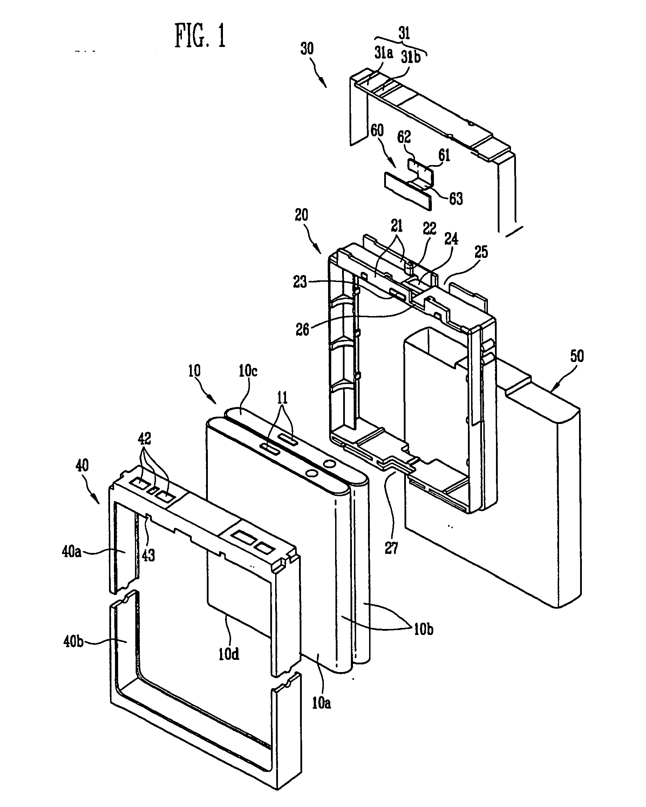

FIG. 1 is an exploded perspective view of a battery assembly according to an embodiment of the present invention.

Referring to FIG. 1, the battery assembly includes a pair of bare cells 10, a protective circuit module 30 electrically coupled to the bare cells 10, an internal frame 20, an external frame 40, and a taping member 50. The embodiment shows a can type secondary battery but the invention is not limited thereto.

The bare cells 10 each have an electrode terminal 11 exposed on an upper surface 10c. Each bare cell also includes an electrode assembly and a can receiving the electrode assembly, wherein the electrode assembly includes an cathode plate coated with cathode active material, a separator, and a anode plate coated with anode active material.

Electrode tabs are joined to areas extending from the respective cathode plate and anode plate. One of the electrode tabs is coupled to the can or cap plate and the other is coupled to the electrode terminal 11, so that the electrode terminal 11 is exposed to the outside of the can to be electrically coupled to the protective circuit module 30.

The protective circuit module 30 includes an electrical connection terminal (not shown) installed for electrical connection with the electrode terminals 11, and further includes an external input/output terminal part 31 on an upper surface thereof.

The internal frame 20 is generally rectangular and is configured to accommodate and hold the bare cells with their respective major side surfaces 10a exposed. The internal frame 20 is in this case formed with the same shape as the external profile of the bare cells 10 so that the pair of bare cells 10 are gripped by the internal frame 20.

An internal terminal exposing part 24 is further formed on the upper part of the internal frame 20, so that the electrode terminals 11 of the bare cells 10 are exposed, and extension parts 21 are also formed on the upper part of the internal frame 20. The extension parts 21 extend from respective sides of the upper part of the internal frame 20.

Recesses 22 for anchoring the coupling tab 60 are further formed on the respective inner sides of the extension parts 21 to allow the electrode terminal 11 and the coupling tab 60 to be easily welded. In this particular embodiment, the recesses 22 are formed by providing flanges on the extension parts. Also, at the lower side of the internal frame 20, a pair of concave units 27 that face each other is formed. The concave units 27 are formed ˙so that the bare cell 10 can be easily inserted into or withdrawn from the internal frame 20.

Although the internal frame 20 according to this embodiment of the present invention is generally rectangular, it could also be formed with an inverted rectangular "U" shape so that the major side surfaces 10a and the lower surfaces 10d of the bare cells 10 are exposed.

The coupling tab 60 that couples the pair of electrode terminals 11 is seated on the internal terminal exposing unit 24 of the internal frame 20. The coupling tab 60 includes a terminal contacting part 63 that contacts the electrode terminals 11; a pair of vertical ribs 61, each of which extends from a respective end of the terminal contacting part 63; and a pair of projection ribs 62 that extend in opposite directions from one of the respective vertical ribs 61. The coupling tab 60 is electrically connected to the protective circuit module 30. For this purpose, a lead member (not shown) can be further included between the coupling tab 60 and the protective circuit module 30. One end of the lead member is connected to the coupling tab 60, and the other end of the lead member extends through an opening 26 ine one of the extension parts 21 can be connected to the protective circuit module 30.

The external frame 40 is coupled to the bare cell 10, which is electrically coupled to the protective circuit module 30 with the internal frame 20 therebetween as described above, in order to form a portion of the external appearance of the battery assembly.

The external frame 40 is formed by an inter-coupling of an upper external frame 40a and a lower external frame 40b that are separately provided but the external frame 40 may be formed in an integrated form. The outer side of the external frame 40 is surrounded by the taping member 50, making it possible to reinforce adhesion between the bare cell 10 and the external frame 40.

For improving coherence between the internal frame 20 and the external frame 40, a projecting unit 23 is formed on the internal frame 20, and the projecting unit 23 and a recess 43 are located in respective positions that correspond to each other, so that they inter-engage. A further recess 25 is provided in the extension part 22 to enable a welding rod to be inserted when the coupling tab 60 and the electrode terminal of the bare cells 10 are welded.

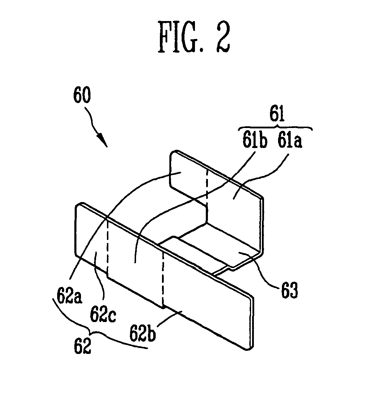

FIG. 2 is a perspective view of the coupling tab 60.

Referring to FIG.2 it will be seen that a first projection rib 62a extends to the left side of one vertical rib 61 a and a second projection rib 62b extends to the right side of the other vertical rib 61 b. Furthermore, a third projection rib 62c extends in the left side on the other vertical rib 61 b. The projection ribs 62a, 62b, and 62c are inserted into the recesses 22 of the internal frame 20, making it possible to anchor the coupling tab 60 within the internal frame 20 and hence secure it relative to the position of the bare cells.

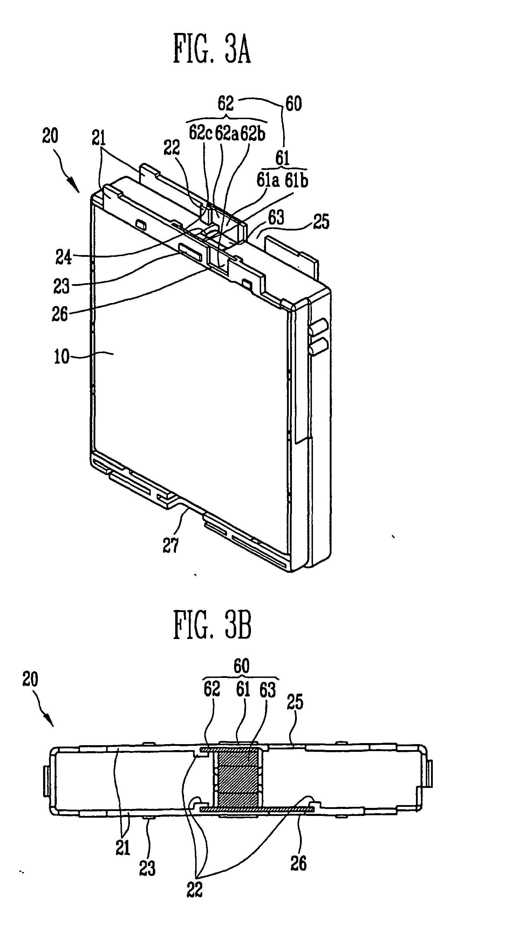

FIG. 3A is a perspective view showing a state where the internal frame 20 and the coupling tab 60 according to this embodiment of the present invention are coupled, and FIG. 3B is a plan view showing the same state.

Referring to FIGS. 3A and 3B, the coupling tab 60 is seated on the internal terminal exposing part 24 to be coupled in a state where the respective bare cells 10 are forcibly put into the internal frame 20 so that one major side surface 10 of each bare cell 10 is exposed. More specifically, the terminal contacting part 63 of the coupling tab 60 is seated on the internal terminal exposing part 24, and the vertical ribs 61 are positioned so as to internally contact to the extension parts 21 of the internal frame 20.

The projection ribs 62 are retained within the recesses 22 formed on the inner side of the extension parts 21. Therefore, the coupling tab 60 is fixed onto the internal terminal exposing part 24 to be electrically coupled to the electrode terminals 11 (see FIG. 1) of the bare cells 10, and at this time, the coupling tab 60 is seated in an upper region of the internal frame 20.

In this state, the electrode terminals 11 of the bare cells 10 and the coupling tab 60 can be coupled to each other by welding. As the projection ribs 62 are secured by the recesses 22, the coupling tab 60 can be welded in an exact position relative to the electrode terminal 11. As the opening 25 into which a welding rod is inserted is formed in one area of the extension part 21 of the internal frame 20, it is possible to easily perform welding of the plurality of bare cells 10 and the coupling tab 60.

Opening 26 is further formed in the extension part 21 opposed to the welding opening 25. Opening 26 therefore enables the coupling tab 60 to be safely seated on the terminal exposing part 24, by allowing the coupling tab 60 to be easily held, when coupling the coupling tab 60 into the internal frame 20.

Herein, since the first projection rib 62a extends only on the left side of one vertical rib 61 a of the coupling tab 60, it cannot block the welding opening 25. Also, since the respective second projection rib 62b and third projection rib 63b extend from both sides of the other vertical rib 61 b of the coupling tab 60, the coupling tab 60 can be inserted in the direction of the internal frame 20, while holding the second projection rib 62b via the opening 26.

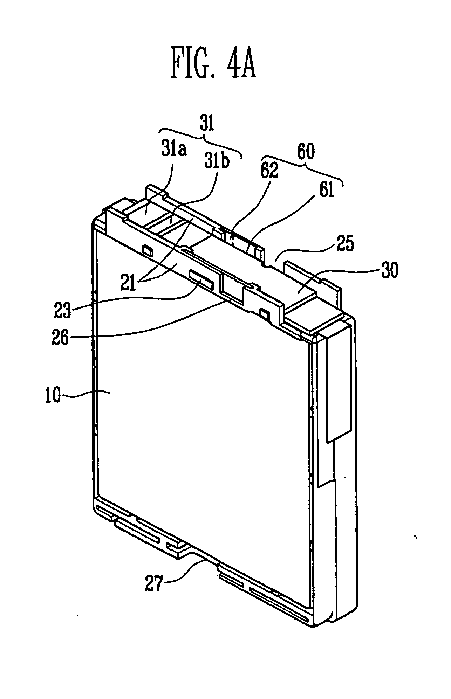

FIG. 4A is a perspective view of the core pack of this embodiment of the present invention.

Referring to FIG. 4A, the protective circuit module 30 is seated on the upper surface of the internal frame 20 with which the bare cells 10 and the coupling tab 60 are coupled. Herein, the protective circuit module 30 is attached to the internal frame 20 by welding or an insulation tabe.

The coupling tab 60 is electrically connected with the protective circuit module 30 but the internal frame 20 is positioned between the bare cells 10 and the protective circuit module 30 to isolate areas other than the coupling tab 60. The protective circuit module 30 is electrically connected with the coupling tab 60 simultaneously with being physically coupled therewith and includes a printed circuit board (drawings' reference numeral thereof is not shown). The printed circuit board is formed with a protective circuit, such as a circuit to control charge and discharge of the battery and/or a circuit for preventing overdischarge and overcharge.

Furthermore, the protective circuit module 30 may include a protective device such as a thermistor or a temperature fuse. These block current when voltage and current of a battery become higher than the prescribed voltage and current due to temperature rising or excessive charge/discharge of the battery, thereby preventing danger such as breakage of the battery, combustion, etc. Moreover, the protective circuit module 30 includes an electrical connecting terminal (not shown) installed on the printed circuit board for an electrical connection with the coupling tab 60.

The protective circuit module 30 as above, which transmits and receives electrical signals between the bare cell 10 and an external equipment (not shown), further includes an external input/output terminal part 31 formed on the upper thereof, the external input/output terminal part 31 functioning as an electrical medium between the protective circuit module 30 and the external equipment.

The external input/output terminal part 31 includes a metal part 31 a and a housing part 31 b surrounding the metal part 31 a. The metal part 31 a is plated with gold (Au) that is conductive material to serve to allow electrical signals to flow between the bare cell 10 and the external equipment. The housing part 31 b is formed of plastic material that serves to isolate the metal parts 31 a from each other, the metal parts 31 a being interposed between the housing parts 31 b at a predetermined interval.

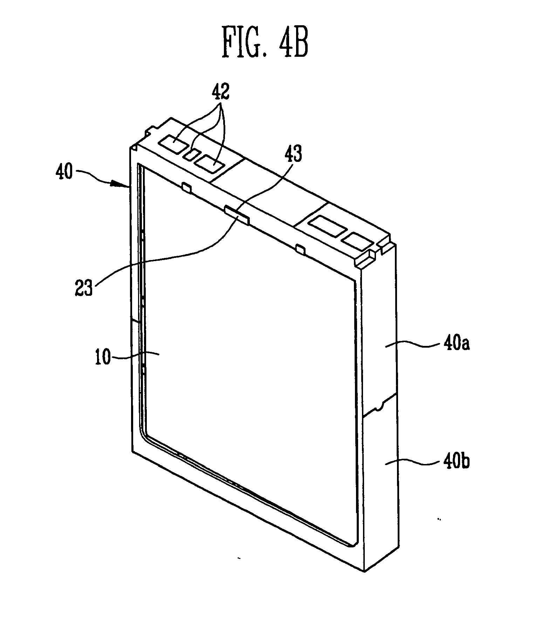

FIG. 4B is a perspective view showing a state where an external frame is assembled outside of the core pack according to this embodiment of the present invention.

Referring to FIG. 4B, as the upper external frame 40a and the lower external frame 40b are separately provided and inter-coupled, the external frame 40 can surround and receive the bare cell 10 mounted with the protective circuit module and the internal frame. An external terminal exposing part 42 that exposes the external input/output terminal part 31 to the outside is further provided in the external frame 40.

Herein, the internal frame 20 serves to isolate the bare cell 10 from the protective circuit module 30, and the external frame 40 is installed for the outline shape and strength of the battery assembly. The internal frame 20 and the external frame 40 as above may be formed of any one selected from the group consisting of Polycarbonate (PC), Polyethylene Terephthalate Glycol (PETG), PolyEthylene (PE), PolyPropylene (PP), and Acronitrili-Butadiene-Styren (ABS). When the external frame 40 is formed in the illustrated rectangular shape, it can be easily assembled with the internal frame 20 by some elasticity generated from the material.

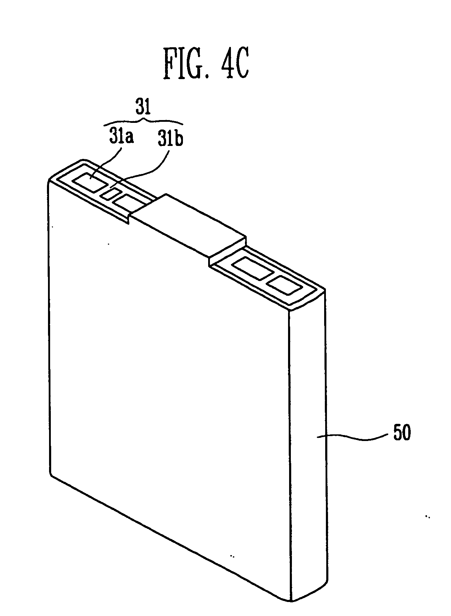

FIG. 4C is a perspective view of the battery assembly according to this embodiment of the present invention.

Referring to FIG. 4C, after the core pack is assembled with the external frame 40, the taping member 50 is applied to the outer side thereof. The taping member 50 is used for reinforcing the coupling state of the core pack and the external frame 40, wherein it may have a shape where only an engagement part between the external frame 40 and the core pack is locally surrounded or a single sheet shape where the entirety of the outer surfaces of the external frame 40 and the core pack is surrounded. Herein, the shape of the tabing member 50 is not limited.

The taping member 50 may be a packaging label including protection, insulation, etc. function of a secondary battery as well as may be printed with discharge capacity or manufacturing date of the secondary battery. Although synthetic resin or paper, etc. that is commonly used as packaging material may be used as the material of the packaging label, the use of a contraction tube is preferable.

As described above, the projection ribs 62 are formed on the coupling tab 60 that connects the plurality of bare cells 10 and the recesses 22 are formed on the internal frame 20 that receives the plurality of bare cells 10, making it possible to ensure close, controlled contact between the coupling tab 60 and the bare cells 10 when the plurality of bare cells 10 are welded with the coupling tab 60. Moreover, the coupling tab 60 can be fixed in an exact position relative to the bare cells in order to reduce defects of the product, making it possible to improve productivity.

Although this embodiment includes connection tabs on the coupling tab and recesses on the extension parts, this can be reversed, so that the coupling tab includes recesses and the extension parts include male formations for coupling with the recesses.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A battery assembly comprising:
at least two bare cells (10), each bare cell (10) having an electrode terminal (11) formed at a respective first surface thereof;
a frame (20) that accommodates the bare cells; and
a coupling tab (60) seated in the frame (20);
wherein the coupling tab (60) comprises a coupling portion that couples the electrode terminals (11), and an anchor formation that is engaged with the frame in order to secure the position of the coupling tab relative to the frame;
wherein the frame (20) comprises first and second extension parts that project away from the bare cells (10) and the coupling tab is received between the extension parts, wherein at least one of the extension parts includes grip means for cooperating with the anchor formation.

2. A battery assembly according to Claim 1, wherein the coupling tab comprises first and second vertical ribs, each said rib abutting a respective one of the extension parts.

3. A battery assembly according to Claim 1 or 2, wherein at least one of the extension parts comprises a wall.

4. A battery assembly according to any one of Claims 1 to 3, wherein one of the anchor formation and the grip means includes a first projection and other of the anchor formation and the grip means comprises a first recess, the first projection being accommodated within the first recess.

5. A battery assembly according to Claim 4, wherein one of the anchor formation and the grip means includes a second projection and other of the anchor formation and the grip means comprises a second recess, the second projection being accommodated within the second recess.

6. A battery assembly according to Claim 1, wherein:
the coupling tab (60) comprises first and second vertical ribs, each said rib abutting a respective one of the extension parts;
each of the extension parts includes a respective recess; and
the anchor formation is defined by first and second anchor projections respectively provided on the first and second vertical ribs, the said anchor projections extending In mutually opposite directions and engaging in respective ones of the said recesses.

7. A battery assembly according to Claim 6, wherein the second vertical rib comprises a third anchor projection extending in the same direction as the first anchor projection.

8. A battery assembly according to Claim 6 or 7, wherein the recesses take the form of slots, and the slots and the first and second vertical ribs extend in a direction substantially parallel to a direction in which the coupling tab is adapted to be inserted between the extension parts during an assembly process.

9. A battery assembly according to any one of Claims 1 to 8 , wherein one of the extension parts includes a first access opening that is situated in such a position as to enable a welding apparatus to access an interface between the said electrode terminals and the coupling tabs during a manufacturing process.

10. A battery assembly according to Claim 9 when dependent upon Claim 6, wherein the first access opening is situated in the first extension part at a position directly opposite the second anchor projection.

11. A battery assembly according to Claim 10, wherein the second extension part comprises a second access opening at a position directly adjacent the second anchor projection.

12. A battery assembly according to any preceding claim, wherein the bare cells (10) are retained within the frame (20) using a push-fit.

13. A battery assembly according to any preceding claim, wherein the said frame (20) is an internal frame accommodated within an external frame (40).

14. A battery assembly according to any preceding claim, wherein the frame includes an opening at a position corresponding to a location of at least one of the electrode terminals, the coupling tab is seated in the frame at a position adjacent the opening, and the coupling portion forms at least part of an electrical connection that extends through the opening.

## Patentansprüche

1. Batteriebaugruppe, umfassend:
mindestens zwei blanke Zellen (10), wobei jede blanke Zelle (10) einen Elektrodenanschluss (11) hat, der an einem jeweiligen ersten Ende derselben ausgebildet ist;
einen Rahmen (20), der die blanken Zellen aufnimmt; und
eine Kopplungs-Kontaktfahne (60), die in dem Rahmen (20) sitzt;
worin die Kopplungs-Kontaktfahne (60) einen Kopplungsabschnitt, der die Elektrodenanschlüsse (11) koppelt, und eine Verankerungsanordnung, die in den Rahmen eingerastet wird, um die Position der Kopplungs-Kontaktfahne relativ zu dem Rahmen zu sichern, umfasst;
worin der Rahmen (20) einen ersten und zweiten Erweiterungsteil umfasst, die von den blanken Zellen (10) abstehen, und die Kopplungs-Kontaktfahne zwischen den Erweiterungsteilen aufgenommen wird, worin mindestens einer der Erweiterungsteile Griffmittel zum Zusammenwirken mit der Verankerungsanordnung aufweist.

2. Batteriebaugruppe nach Anspruch 1, worin die Kopplungs-Kontaktfahne eine erste und zweite vertikale Rippe umfasst, wobei jede Rippe an einen entsprechenden der Erweiterungsteile anstößt.

3. Batteriebaugruppe nach Anspruch 1 oder 2, worin mindestens einer der Erweiterungsteile eine Wand umfasst.

4. Batteriebaugruppe nach einem der Ansprüche 1 bis 3, worin eines von Folgendem, nämlich die Verankerungsanordnung und die Griffmittel, einen ersten Vorsprung aufweist und das andere der Verankerungsanordnung und der Griffmittel eine erste Aussparung umfasst, wobei der erste Vorsprung in der ersten Aussparung aufgenommen wird.

5. Batteriebaugruppe nach Anspruch 4, worin eines von Folgendem, nämlich die Verankerungsanordnung und die Griffmittel, einen zweiten Vorsprung aufweist und das andere der Verankerungsanordnung und der Griffmittel eine zweite Aussparung umfasst, wobei der zweite Vorsprung in der zweiten Aussparung aufgenommen wird.

6. Batteriebaugruppe nach Anspruch 1, worin:
die Kopplungs-Kontaktfahne (60) eine erste und zweite vertikale Rippe umfasst, wobei jede Rippe an einen entsprechenden der Erweiterungsteile anstößt;
jeder der Erweiterungsteile eine entsprechende Aussparung aufweist; und
die Verankerungsanordnung durch einen ersten und zweiten Verankerungsvorsprung definiert ist, die auf der ersten bzw. zweiten vertikalen Rippe vorgesehen sind, wobei sich die Verankerungsvorsprünge in einander entgegengesetzten Richtungen erstrecken und in jeweilige der Aussparungen eingreifen.

7. Batteriebaugruppe nach Anspruch 6, worin die zweite vertikale Rippe einen dritten Verankerungsvorsprung umfasst, der sich in der gleichen Richtung wie der erste Verankerungsvorsprung erstreckt.

8. Batteriebaugruppe nach Anspruch 6 oder 7, worin die Aussparungen die Form von Schlitzen annehmen und die Schlitze und die erste und zweite vertikale Rippe sich in einer Richtung erstrecken, die im Wesentlichen parallel zu einer Richtung ist, in der die Kopplungs-Kontaktfahne dafür eingerichtet ist, während eines Zusammenbauprozesses zwischen die Erweiterungsteile eingesetzt zu werden.

9. Batteriebaugruppe nach einem der Ansprüche 1 bis 8, worin einer der Erweiterungsteile eine erste Zugangsöffnung aufweist, die sich in einer solchen Position befindet, dass dadurch einer Schweißvorrichtung ermöglicht wird, während eines Herstellungsprozesses eine Berührungsfläche zwischen den Elektrodenanschlüssen und den Kopplungs-Kontaktfahnen zu erreichen.

10. Batteriebaugruppe nach Anspruch 9, wenn abhängig von Anspruch 6, worin die erste Zugangsöffnung sich im ersten Erweiterungsteil an einer Position befindet, die dem zweiten Verankerungsvorsprung direkt gegenüberliegt.

11. Batteriebaugruppe nach Anspruch 10, worin der zweite Erweiterungsteil eine zweite Zugangsöffnung an einer Position umfasst, die direkt an den zweiten Verankerungsvorsprung angrenzt.

12. Batteriebaugruppe nach einem der vorhergehenden Ansprüche, worin die blanken Zellen (10) unter Verwendung eines Steckverschlusses im Rahmen (20) gehalten werden.

13. Batteriebaugruppe nach einem der vorhergehenden Ansprüche, worin der Rahmen (20) ein innerer Rahmen ist, der in einem äußeren Rahmen (40) aufgenommen wird.

14. Batteriebaugruppe nach einem der vorhergehenden Ansprüche, worin der Rahmen eine Öffnung an einer Position aufweist, die einem Ort von mindestens einem der Elektrodenanschlüsse entspricht, wobei die Kopplungs-Kontaktfahne in dem Rahmen an einer Position sitzt, die an die Öffnung angrenzt, und der Kopplungsabschnitt zumindest einen Teil einer elektrischen Verbindung bildet, die sich durch die Öffnung erstreckt.

## Revendications

1. Assemblage de batterie, comprenant :
au moins deux cellules nues (10), chaque cellule nue (10) comportant une borne d'électrode (11) formée au niveau d'une première surface respective de celle-ci ;
un cadre (20) recevant les cellules nues ; et
une languette d'accouplement (60), logée dans le cadre (20) ;
dans lequel la languette d'accouplement (60) comprend une partie d'accouplement accouplant les bornes d'électrode (11), et une structure d'ancrage engagée dans le cadre en vue de fixer la position de la languette d'accouplement par rapport au cadre ;
dans lequel le cadre (20) comprend des première et deuxième parties d'extension, débordant à l'écart des cellules nues (10) et la languette d'accouplement est reçue entre les parties d'extension, au moins une des parties d'extension englobant un moyen de préhension destiné à coopérer avec la structure d'ancrage.

2. Assemblage de batterie selon la revendication 1, dans lequel la languette d'accouplement comprend des première et deuxième nervures verticales, chaque dite nervure butant contre une partie respective des parties d'extension.

3. Assemblage de batterie selon les revendications 1 ou 2, dans lequel au moins une des parties d'extension comprend une paroi.

4. Assemblage de batterie selon l'une quelconque des revendications 1 à 3, dans lequel un élément, la structure d'ancrage ou le moyen de préhension, englobe une première saillie, l'autre élément, la structure d'ancrage ou le moyen de préhension, comprenant un premier évidement, la première saillie étant reçue dans le premier évidement.

5. Assemblage de batterie selon la revendication 4, dans lequel un élément, la structure d'ancrage ou le moyen de préhension, englobe une deuxième saillie, l'autre élément, la structure d'ancrage ou le moyen de préhension, comprenant un deuxième évidement, la deuxième saillie étant reçue dans le deuxième évidement.

6. Assemblage de batterie selon la revendication 1, dans lequel :
la languette d'accouplement (60) comprend des première et deuxième nervures verticales, chaque dite nervure butant contre une partie respective des parties d'extension ;
chacune des parties d'extension englobe un évidement respectif ; et
la structure d'ancrage est définie par des première et deuxième saillies d'ancrage, agencées respectivement sur les première et deuxième nervures verticales, lesdites saillies d'ancrage s'étendant dans des directions mutuellement opposées et s'engageant dans des évidements respectifs desdits évidements.

7. Assemblage de batterie selon la revendication 6, dans lequel la deuxième nervure verticale comprend une troisième saillie d'ancrage, s'étendant dans la même direction que la première saillie d'ancrage.

8. Assemblage de batterie selon les revendications 6 ou 7, dans lequel les évidements ont la forme de fentes, les fentes et les première et deuxième nervures verticales s'étendant dans une direction pratiquement parallèle à une direction dans laquelle la languette d'accouplement est adaptée pour être insérée entre les parties d'extension au cours d'un processus d'assemblage.

9. Assemblage de batterie selon l'une quelconque des revendications 1 à 8, dans lequel une des parties d'extension englobe une première ouverture d'accès, située dans une position telle à permettre l'accès d'un appareil de soudage à une interface entre lesdites bornes d'électrode et les languettes d'accouplement au cours d'un processus de fabrication.

10. Assemblage de batterie selon la revendication 9, dépendant de la revendication 6, dans lequel la première ouverture d'accès est située dans la première partie d'extension, au niveau d'une position directement opposée à la deuxième saillie d'ancrage.

11. Assemblage de batterie selon la revendication 10, dans lequel la deuxième partie d'extension comprend une deuxième ouverture d'accès au niveau d'une position directement adjacente à la deuxième saillie d'ancrage.

12. Assemblage de batterie selon l'une quelconque des revendications précédentes, dans lequel les cellules nues (10) sont retenues dans le cadre (20) par l'intermédiaire d'un ajustement par poussée.

13. Assemblage de batterie selon l'une quelconque des revendications précédentes, dans lequel ledit cadre (20) est un cadre interne reçu dans un cadre externe (40).

14. Assemblage de batterie selon l'une quelconque des revendications précédentes, dans lequel le cadre englobe une ouverture au niveau d'une position correspondant à un emplacement d'au moins une des bornes d'électrode, la languette d'accouplement étant positionnée dans le cadre au niveau d'une position adjacente à l'ouverture, et la partie d'accouplement faisant au moins partie d'une connexion électrique s'étendant à travers l'ouverture.
